# EUROPÄISCHE PATENTSCHRIFT

(11) **EP 2 602 032 B1**
(45) Veröffentlichungstag und Bekanntmachung des Hinweises auf die Patenterteilung: **05.06.2019**
(21) Anmeldenummer: 12195944.9
(22) Anmeldetag: 06.12.2012
(51) Int. Cl.: B21C 37/15, B21B 19/02, B21C 1/26, F16L 9/18

(54) **Verfahren zur Herstellung eines mehrschichtigen Metallrohres**
Method for producing a multilayer metal tube
Procédé de fabrication d'un tube métallique multicouche

(30) Priorität: 09.12.2011 DE 102011120890
(43) Veröffentlichungstag der Anmeldung: 12.06.2013
(73) Patentinhaber: Benteler Steel/Tube GmbH, 33104 Paderborn (DE)
(72) Erfinder: Peters, Andreas, Dr., 40625 Düsseldorf (DE); Lorentz, Albert, 47647 Kerken (DE); Balun, Jozef, 33104 Paderborn (DE)
(74) Vertreter: Cullinane, Marietta Bettina

(56) Entgegenhaltungen:
- EP-A1- 0 103 439
- GB-A- 2 163 691
- JP-A- S 619 564
- US-A- 3 316 630
- US-A1- 2005 251 987

## Beschreibung

Die vorliegende Erfindung betrifft ein Verfahren zur Herstellung eines mehrschichtigen Metallrohres.

Zur Herstellung mehrschichtiger Rohre offenbart der Stand der Technik verschiedene Fertigungsverfahren. Beispielsweise wird in der US 4,784,311A das Kaltziehen zweier ineinander gefügter Rohre vorgeschlagen. Weiterhin wird beispielsweise in der US 6,520,213 B1 das Schweißen der Enden zweier ineinander gefügter Rohre vorgeschlagen. In der JP 40-73482 A ist bei einem Rohr mit geflochtener Metallschicht und einer synthetischen Kunststoffschicht das Löten der Enden zweier ineinander gefügter Rohre beschrieben. Schließlich offenbart die EP 0 998 994 A2 das Umwickeln eines Rohres mit einem Stahlband.

Bei der Herstellung eines mehrschichtigen Rohres durch Kaltziehen oder durch Umwickeln wird nach dem Zusammenfügen der zwei Rohre eine Wärmebehandlung zur Herstellung der Verbindung zwischen den Rohren benötigt.

Bei dem Stand der Technik, bei dem die Enden der Rohre durch Schweißen oder Löten miteinander verbunden werden, ist es nachteilig, dass die Rohre außer an den Schweiß- oder Lötstellen nicht miteinander in Kontakt stehen. Die Verbindung zwischen den Rohren wird daher ausschließlich durch die Schweißnaht oder die Lötnaht bestimmt. Während in einigen Anwendungen eventuell die fehlende Verbindung zwischen den Rohren über deren Länge akzeptabel sein kann, ist es bei vielen Anwendungen erforderlich oder zumindest wünschenswert in einem mehrschichtigen Rohr einen kontinuierlichen Übergang von Eigenschaften, insbesondere physikalischen Eigenschaften, wie der Wärmeleitfähigkeit zu schaffen. Weiterhin ist aus der US 3,316,630 A ein Verfahren bekannt, mit dem ein verschalter oder plattierter Körper hergestellt werden kann. Bei diesem Verfahren wird ein Beschichtungsrohr in das Grundrohr eingeführt oder auf dieses aufgebracht. Zwischen den beiden Rohren besteht ein Abstand, in den Schutzgas eingeführt wird. Damit der Abstand zwischen den Rohren bestehen bleibt, sind die Rohre mit einem Kopfstück verschweißt. Anschließend wird der aus zwei Rohren zusammengesetzte Körper erwärmt und mittels einer Ziehmatrize so verarbeitet, dass das Grundrohr auf das Beschichtungsrohr gedrückt wird oder das Beschichtungsrohr auf das Grundrohr gedrückt wird. Das Andrücken der Rohre kann auf einer Ziehbank oder Stoßbank erfolgen. Ein Nachteil dieses Verfahrens ist, dass als Ausgangsmaterialien Rohre verwendet werden, die somit eine geringe Wandstärke und in der Regel eine große Länge aufweisen. Bereits das Ineinanderbringen der Rohre ist daher aufwendig. Außerdem ist aus der JP S61 9564 A ein Verfahren bekannt, in dem zwei Blöcke ineinander geschoben, erwärmt und durch Walzen unter Verringerung der Wandstärke zu einem Mehrschichtrohr umgeformt werden.

Aufgabe der vorliegenden Erfindung ist es daher eine Lösung zu schaffen, mittels derer die Nachteile des Standes der Technik beseitigt oder zumindest minimiert werden kann. Insbesondere soll die Herstellung des mehrschichtigen Rohres einfach möglich sein und ein mehrschichtiges Rohr liefern, in dem die Eigenschaften, insbesondere physikalische Eigenschaften sich möglichst kontinuierlich von einer Schicht zur anderen ändern.

Gemäß einem ersten Aspekt wird die Aufgabe daher gelöst durch ein Verfahren zur Herstellung eines mehrschichtigen Metallrohres, das dadurch gekennzeichnet ist, dass das Verfahren die folgenden Schritte umfasst:
- Ineinanderbringen von zumindest einem Innenblock und mindestens einem Außenhohlblock
- Erwärmen der ineinander eingefügten Blöcke
- Verringerung der Wanddicke der ineinander eingefügten Blöcke durch Behandlung auf einer Stoßbank zur Bildung des mehrschichtigen Metallrohres, das das Endprodukt darstellt, wobei der Innenblock ein Hohlblock ist.

Gemäß einem zweiten Aspekt wird die Aufgabe gelöst durch ein Verfahren zur Herstellung eines mehrschichtigen Metallrohres, das dadurch gekennzeichnet ist, dass das Verfahren die folgenden Schritte umfasst:
- Ineinanderbringen von zumindest einem Innenblock und mindestens einem Außenhohlblock
- Erwärmen der ineinander eingefügten Blöcke
- Verringerung der Wanddicke der ineinander eingefügten Blöcke durch Behandlung auf einer Stoßbank zur Bildung des mehrschichtigen Metallrohres, das das Endprodukt darstellt, wobei der Innenblock einen Vollmaterialblock darstellt und vor der Behandlung der ineinander eingefügten Blöcke auf der Stoßbank, die ineinander eingefügten Blöcke einem Schrägwalzverfahren unterzogen werden.

Als mehrschichtiges Metallrohres wird erfindungsgemäß ein Rohr bezeichnet, das mindestens zwei koaxiale Schichten aufweist. Unter Rohr wird hierbei ein länglicher Hohlkörper verstanden, dessen Länge wesentlich größer als sein Durchmesser ist. Als Block wird im Sinne der Erfindung das Ausgangsmaterial zur Herstellung des Metallrohres verstanden. Der Block kann auch als Knüppel bezeichnet werden. Als Block wird im Sinne der vorliegenden Erfindung ein Materialblock mit rundem Querschnitt, das heißt ein Rundblock, verstanden. Der Innenblock wird im Folgenden auch als innerer Block bezeichnet. Der Außenhohlblock wird im Folgenden auch als äußerer Hohlblock oder Hohlblock bezeichnet. Der Innenblock stellt erfindungsgemäß einen Hohlblock oder einen Vollmaterialblock, das heißt einen Block ohne Lochung, dar. Als Hohlblock wird vorzugsweise ein gelochter Rundblock oder eine Rohrluppe bezeichnet. Als Hohlblock kann aber auch ein gelochter Knüppel verwendet werden. Der Hohlblock stellt einen dickwandigen Hohlkörper dar. Die Lochung in dem Block kann sich über die gesamte Höhe des Blockes erstrecken. In diesem Fall wird bei den erfindungsgemäßen Verfahren vor der Behandlung auf der Stoßbank und vorzugsweise vor dem Ineinanderbringen der Hohlblöcke an jeden der Hohlblöcke ein Boden angebracht. Dieser kann beispielsweise an den durchgelochten Block angeschweißt werden. Alternativ kann die Lochung des Blockes auch nur über eine Höhe erfolgen, die geringer als die Höhe des Hohlblockes ist. Als Höhe wird die Abmessung des Blockes bezeichnet, die zu dem Durchmesser des Blockes senkrecht steht.

In jedem Fall bezeichnet ein Block, das heißt ein Vollmaterialblock oder ein Hohlblock, aber ein Ausgangsprodukt oder einen Rohling, das beziehungsweise der außer einer gegebenenfalls vorgesehenen Lochung und gegebenenfalls dem Vorsehen eines Bodens, keiner weiteren Bearbeitung vor den erfindungsgemäßen Verfahren unterzogen werden muss.

Als Ineinanderbringen von mindestens zwei Blöcken wird erfindungsgemäß das Einbringen eines Blockes in den Hohlraum, das heißt die Lochung eines größeren Hohlblockes bezeichnet. Der Unterschied zwischen dem Außendurchmesser des inneren Blocks und dem Innendurchmesser des äußeren Hohlblocks ist hierbei vorzugsweise gering. Allerdings soll das Ineinandereinbringen auch ohne Aufbringen von Druckkraft möglich sein. Soll ein mehrschichtiges Metallrohr mit mehr als zwei Schichten hergestellt werden, so wird nach dem beschriebenen Einbringen eines ersten Blocks in einen Hohlblock anschließend oder gleichzeitig der äußere Hohlblock in den Hohlraum oder die Lochung eines noch größeren Hohlblocks eingeführt. Nach dem Ineinandereinbringen, können die Blöcke gegebenenfalls aneinander fixiert werden. Hierzu können beispielsweise die Enden der Blöcke miteinander verschweißt werden.

Das Erwärmen der ineinander eingefügten oder eingebrachten Blöcke kann in einem Ofen erfolgen. Hierbei wird die Temperatur vorzugsweise so eingestellt oder geführt, dass nach dem Erwärmen vorzugsweise alle Blöcke die gleiche Temperatur aufweisen.

Nach dem Erwärmen werden die ineinander eingebrachten Blöcke einer Rohrherstellungsanlage in Form einer Stoßbank zugeführt. Die Zuführung zur Rohrherstellungsanlage erfolgt vorzugsweise unmittelbar nach dem Erwärmen der ineinander eingebrachten Blöcke. Es ist auch möglich, dass die ineinander eingebrachten Blöcke an der Stoßbank auf die gewünschte Temperatur für das Stoßbankverfahren gebracht werden. In jedem Fall findet die Stoßbankbehandlung an den erwärmten Blöcken statt. Die erfindungsgemäßen Verfahren stellen somit Warmumformverfahren dar. Als Behandlung auf einer Stoßbank, das auch als Stoßbankverfahren bezeichnet werden kann, wird erfindungsgemäß zumindest der Schritt verstanden, bei dem das Ausgangsprodukt mittels eines Dorns oder einer Stange durch ein Streckwerkzeug geführt wird. Als Streckwerkzeug wird hierbei ein Werkzeug verstanden, mittels dessen die Wandstärke der ineinander eingebrachten Blöcke reduziert und deren Länge dabei gleichzeitig vergrößert wird.

Das Stoßbankverfahren kann erfindungsgemäß die Schritte des Aufstülpens der erwärmten ineinander eingebrachten Blöcke über das Ende eines Dorns oder einer Stange, das Stoßen der Blöcke durch mindestens ein Streckwerkzeug, in der Regel aber mehrere hintereinander angeordnete Streckwerkzeuge, und gegebenenfalls ein anschließendes Lösungswalzen umfassen. Das oder die Streckwerkzeuge, die insbesondere Rollenkaliber, Rollenkörbe oder Walzen darstellen können, können angetriebene Werkzeuge oder nicht angetriebene Werkzeuge sein.

Als Verringerung der Wanddicke der ineinander eingefügten Blöcke wird erfindungsgemäß die Verringerung der Wanddicke mindestens eines der Blöcke verstanden. Vorzugsweise werden bei der Behandlung auf der Stoßbank aber die Wanddicken aller ineinander eingeführten Blöcke reduziert. Ist der Innenblock als Ausgangsprodukt als Vollmaterialblock ausgestaltet, so wird als Wanddicke oder Wandstärke des Innenblocks dessen Wanddicke in dem Zustand nach der Lochung, d.h. nach dem Schrägwalzen, bezeichnet. In diesem Zustand stellt der Innenblock einen Hohlblock dar, der aus dem Vollmaterialblock geformt wurde. Ab diesem Zeitpunkt in den erfindungsgemäßen Verfahren wird der Innenblock daher im Folgenden auch als Hohlblock oder Innenhohlblock bezeichnet.

Durch das Stoßbankverfahren wird erfindungsgemäß das herzustellende mehrschichtige Metallrohr gebildet. Das Produkt, das die Stoßbank verlässt stellt somit das Endprodukt dar. Dies bedeutet, dass eine weitere Bearbeitung des Endproduktes, das die Stoßbank verlässt, nicht notwendig ist um das herzustellende mehrschichtige Metallrohr zu erhalten. Insbesondere ist keine weitere Wärmebehandlung nach dem Stoßbankverfahren notwendig. Das Endprodukt kann somit unmittelbar weiteren Verarbeitungsschritten, wie dem Reinigen, Schneiden, Biegen und dergleichen zugeführt werden. Allerdings ist es auch möglich das mehrschichtige Metallrohr nach dem Stoßbankverfahren zur Änderung der Abmessungen einem Streckreduzierprozess, insbesondere mittels eines Streckreduzierwalzwerkes, zu unterziehen. In diesem Fall wird das mehrschichtige Rohr, das das Streckreduzierwalzwerk verlässt, als Endprodukt der erfindungsgemäßen Verfahren bezeichnet. Für den Streckreduzierprozess kann das mehrschichtige Metallrohr auf eine Umformtemperatur im Bereich von 700°C bis 1200°C, vorzugsweise im Bereich von 800°C bis 1100°C aufgewärmt werden. Das mehrschichtige Metallrohr wird im Folgenden auch als mehrschichtiges Rohr bezeichnet. Die Schichten des mehrschichtigen Metallrohres werden im Folgenden auch als Außenrohr, Zwischenrohr und Innenrohr bezeichnet, je nach der Lage der Schicht in dem mehrschichtigen Metallrohr. Vorzugsweise bestehen alle Schichten des mehrschichtigen Rohres aus Metall, das heißt alle eingesetzten Blöcke stellen Metallblöcke dar.

Indem bei den erfindungsgemäßen Verfahren die Stoßbankbehandlung der Blöcke, insbesondere der Hohlblöcke, an erwärmten ineinander eingebrachten Hohlblöcken erfolgt, tritt außer der Reduzierung der Wanddicke der Hohlblöcke, die auch als Wandstärke bezeichnet wird, und der Streckung der Hohlblöcke auch ein Verbinden der Hohlblöcke miteinander auf. Diese Verbindung erfolgt an den Mantelflächen der Hohlkörper, die aneinander anliegen.

Durch die Kombination der auf der Stoßbank und gegebenenfalls auf einem Streckreduzierwalzwerk aufgebrachten Stauchkräfte und Scherkräfte sowie der erhöhten Temperatur, kommt es zwischen den einzelnen Hohlblöcken zu einer stoffschlüssigen Verbindung. Zur Herstellung eines mehrschichtigen Metallrohres, dessen einzelnen Schichten fest miteinander verbunden sind, ist es erfindungsgemäß nicht erforderlich das Rohr nach der Umformung einer weiteren Wärmebehandlung zu unterziehen. Dies bringt zum einen prozesstechnische Vorteile, da der Herstellungsprozess verkürzt wird. Zum anderen wird aber aufgrund der bei der Warmumformung herrschenden erhöhten Temperaturen bei gleichzeitiger Kraftaufbringung auch eine Gefügeveränderung in dem Gefüge der Hohlblöcke bewirkt, die zu einer Diffusion in dem Bereich der Kontaktstellen zwischen aneinander anliegenden Mantelflächen der Hohlblöcke führt.

Indem bei den erfindungsgemäßen Verfahren als Ausgangsprodukte Blöcke, insbesondere mindestens ein Hohlblock und gegebenenfalls ein Vollmaterialblock, eingesetzt werden, weisen die erfindungsgemäßen Verfahren weitere Vorteile auf. Bei den Blöcken handelt es sich im Gegensatz zu Rohren, die im Stand der Technik als Ausgangsprodukte verwendet werden, um Rohlinge. Aus solchen Rohlingen werden im Stand der Technik Rohre hergestellt, die dann anschließend miteinander verbunden werden müssen. Im Gegensatz zu diesen Verfahren, bei denen als Ausgangsprodukte Rohre verwendet werden, ist bei den erfindungsgemäßen Verfahren ein aufwändiges Bearbeiten, insbesondere die Herstellung von einzelnen Rohren durch Strecken oder Ziehen vor der Stoßbankverfahren nicht notwendig und das gesamte Verfahren wird dadurch vereinfacht und verkürzt. Zudem ist auch das Ineinandereinbringen von Blöcken, die eine geringe Länge als bereits gefertigte Rohre aufweisen, leichter, da ein Verkanten weitestgehend verhindert wird und zudem ein Abknicken, das bei Rohren auftreten kann, bei Blöcken nicht zu befürchten ist. Zudem wird durch die Verwendung von Blöcken als Ausgangsprodukten in dem Stoßbankverfahren ein größerer Umformgrad erzielt als bei der Verwendung von Rohren als Ausgangsprodukten. Hierdurch wird die Verbindung zwischen den Schichten des hergestellten Produktes weiter verbessert. Die erfindungsgemäß erzielte Verbindung, die eine metallurgische Verbindung darstellt, zwischen den Schichten des mehrschichtigen Rohres kann auch als Diffusionsverbindung bezeichnet werden. Diese Diffusionsverbindung gewährleistet zum einen eine gute Haftung zwischen den einzelnen Schichten des mehrschichtigen Rohres und schafft gleichzeitig einen kontinuierlichen Übergang der physikalischen Eigenschaften, wie beispielsweise der Wärmeleitfähigkeit, zwischen den Schichten. Es hat sich gezeigt, dass mit dem erfindungsgemäßen Verfahren mehrschichtige Metallrohre herstellen lassen, bei denen durch die Diffusionsverbindung die Grenzfläche zwischen den einzelnen Rohren nahezu vollständig verschwunden ist. Solche mehrschichtigen Rohre sind auch ultraschallprüfungsfähig, ohne dass es zu einer Anzeige bei Längsfehler- und Querfehlerprüfung kommt.

Wie bereits erwähnt, kann der Innenblock, der bei den erfindungsgemäßen Verfahren verwendet wird mit zumindest einem Außenhohlblock ineinander eingefügt wird, ein Hohlblock oder ein Vollmaterialblock sein. Wird ein Vollmaterialblock als Ausgangsprodukt verwendet, wird während des erfindungsgemäßen Verfahrens nach dem Ineinandereinbringen der Blöcke ineinander in den Vollmaterialblock als Innenblock eine Lochung eingebracht.

Erfindunqsqemäß stellt der Innenblock einen Vollmaterialblock dar und die ineinander eingefügten Blöcke werden vor der Behandlung der ineinander eingefügten Blöcke auf der Stoßbank einem Schrägwalzverfahren unterzogen. Durch das Schrägwalzverfahren kann auf einfache Weise ein Loch in dem Innenblock der bereits ineinander eingeführten Blöcke eingebracht werden. Der Innenblock stellt nach dem Schrägwalzen somit einen Hohlblock dar, bei dem sich die Lochung über zumindest einen Teil der Höhe des Blockes erstreckt. Das Einbringen der Lochung in den Vollmaterialblock ist dem Stoßbankprozess vorgeschaltet, erfolgt aber erst nach dem Ineinandereinbringen der Blöcke ineinander. Auch bei dieser Ausführungsform, das heißt bei einem Verfahren, bei dem als Innenblock ein Vollmaterialblock verwendet wird, werden die oben genannten Vorteile gegenüber bekannten Verfahren erzielt. Zudem ist der Aufwand der Bearbeitung der Ausgangsprodukte bei dieser Ausführungsform weiter verringert. Weiterhin ist das Schrägwalzen der ineinander eingeführten Blöcke einfacher als eine Herstellung von Rohren als Ausgangsprodukten, wie dies im Stand der Technik vorgeschlagen ist. Insbesondere sind beim Schrägwalzen Toleranzen nicht so genau einzuhalten, wie dies bei Rohren als Ausgangsprodukten der Fall ist, da bei den Verfahren nach dem Stand der Technik im Gegensatz zu der Ausführungsform des erfindungsgemäßen Verfahrens das Ineinandereinbringen erst nach der Herstellung der Rohre erfolgt.

Bei den erfindungsgemäßen Verfahren werden die ineinander eingebrachten Blöcke vor dem Stoßbankverfahren erwärmt. Bei der Ausführungsform der erfindungsgemäßen Verfahren, bei dem in einen Vollmaterialblock als Innenblock nach dem Ineinandereinbringen der Blöcke ein Loch eingebracht wird, erfolgt das Erwärmen zumindest vor dem Lochungsprozess, insbesondere dem Schrägwalzen. Hierbei werden die Blöcke auf eine Umformtemperatur in einem Bereich von 800°C bis 1500°C, vorzugsweise auf eine Temperatur in dem Bereich von 900°C bis 1400°C erwärmt. Bei dieser Ausführungsform des Verfahrens kann nach dem Schrägwalzschritt vorzugsweise ein weiterer Erwärmungsschritt vorgesehen sein, um die ineinander eingebrachten Blöcke auf eine Umformtemperatur für das Stoßbankverfahren zu bringen.

Gemäß einer bevorzugten Ausführungsform ist der Werkstoff von zumindest zwei der der ineinander eingebrachten Blöcke unterschiedlich.

Bei dieser Ausführungsform kann der erfindungsgemäß erzielte Effekt der Bildung einer Diffusionsschicht beziehungsweise Diffusionsverbindung zwischen den Schichten des mehrschichtigen Rohres besonders gut genutzt werden. Durch die Diffusion können nämlich Bestandteile, beispielsweise Legierungsbestandteile eines Blockes zumindest teilweise in die Oberfläche des benachbarten Blockes eindringen, das heißt eindiffundieren, und dadurch die Verbindung zwischen den herzustellenden Schichten weiter verbessern.

Zudem können durch die Verwendung unterschiedlicher Werkstoffe Eigenschaften für das herzustellende mehrschichtige Metallrohr eingestellt werden, die der jeweiligen geplanten Verwendung des mehrschichtigen Rohres angepasst sind.

Beispielsweise können beliebige Kombinationen von Werkstoffeigenschaften, die sonst in einem einzigen Werkstoff nicht zu erzielen sind, erzielt werden. Diese Werkstoffeigenschaften, die kombiniert werden können, sind beispielsweise die Zähigkeit, die Verschleißbeständigkeit, die Zeitstandfestigkeit, die Korrosionsbeständigkeit, die elektrische Leitfähigkeit, die Wärmeleitfähigkeit, die Einhärtbarkeit, und dergleichen.

Da bei den erfindungsgemäßen Verfahren eine Diffusionsschicht erzeugt wird, kann der Übergang unterschiedlicher Werkstoffeigenschaften von einer Schicht des mehrschichtigen Rohres zu einer anderen kontinuierlich sein, was beispielsweise bezüglich der Wärmeleitfähigkeit von Bedeutung ist. Zudem ist bei der erfindungsgemäß erzielten Verbindung zwischen den Schichten auch eine gute Scherfestigkeit gegeben, so dass auch bei späterer Verarbeitung des mehrschichtigen Rohres eine Störung des kontinuierlichen Übergangs nicht zu befürchten ist oder nur gering ist.

Zudem kann auch eine Kostensenkung durch Substitution eines bestimmten Teiles des mehrschichtigen Rohres, das heißt einer oder mehrer Schichten, durch einen günstigeren Werkstoff erzielt werden.

Gemäß einer bevorzugten Ausführungsform ist der Werkstoff des Innenblocks von dem Werkstoff von zumindest einem der Außenhohlblöcke unterschiedlich. Besonders bevorzugt besteht zumindest der äußerste Außenhohlblocks aus einem anderen Werkstoff als der Innenblock. Diese Ausführungsform ist vorteilhaft, da in der Regel bei der Benutzung der aus den Blöcken zu erzeugenden mehrschichtigen Rohren an der Innenseite des Rohres und an der Außenseite des Rohres verschiedene Bedingungen herrschen. Durch die Verwendung unterschiedlicher Werkstoffe an diesen beiden Seiten des mehrschichtigen Metallrohres, kann diesen verschiedenen Bedingungen Rechnung getragen werden.

Die Temperatur, auf die die Blöcke vor der Stoßbankbehandlung erwärmt werden, hängt von dem Werkstoff beziehungsweise den Werkstoffen der Blöcke ab. Für Stähle hat sich herausgestellt, dass es vorteilhaft ist, wenn die Blöcke zumindest bei Beginn der Behandlung auf der Stoßbank eine Temperatur im Bereich von 800°C bis 1300°C, vorzugsweise im Bereich von 900° bis 1200°C, besitzen. Dieser Temperaturbereich wird je nach Legierungsgehalt und Legierungsbestandteilen geändert beziehungsweise angepasst.

Gemäß einer Ausführungsform erfolgt bei der Behandlung auf der Stoßbank eine Reduktion der Wandstärke der ineinander eingefügten Hohlblöcke um 50% vorzugsweise um bis zu 75%. Die Prozentangaben beziehen sich auf die gesamte Wandstärke der ineinander eingeführten Hohlblöcke zu der gesamten Wandstärke des hergestellten mehrschichtigen Metallrohres. Wird als Innenblock ein Vollmaterialblock als Ausgangsprodukt des Verfahrens verwendet, so wird als Wandstärke des Innenblocks dessen Wandstärke nach dem Einbringen einer Lochung bezeichnet. Der Stoßbank wird somit auch bei Einsatz eines Vollmaterialblockes bei Beginn des erfindungsgemäßen Verfahrens ein Hohlblock als Innenblock zugeführt. Aufgrund der hohen Reduktion der Wandstärke können bei den erfindungsgemäßen Verfahren beispielsweise Hohlblöcke mit einer Wandstärke von 40mm zu Rohren verarbeitet werden, die anschließend als Leitungen, wie beispielsweise Benzinleitungen verwendet werden können, die eine Wandstärke von beispielsweise 10mm aufweisen können.

Durch die hohe Reduktion der Wandstärke der Hohlblöcke wird zum einen die Verbindung zwischen den Schichten des mehrschichtigen Rohres verbessert. Zum Anderen wird durch den hohen Umformgrad auch das Gefüge in den einzelnen Schichten während der Warmumformung verändert, so dass gewünschte Eigenschaften der gezielt eingestellt werden können.

Vorzugsweise erfolgt die Behandlung auf der Stoßbank in mehreren Schritten, vorzugsweise in fünfzehn Schritten. Die Schritte stellen hierbei die Schritte der Streckung und/oder Wandstärkenreduzierung dar. Indem die Wandstärke in mehreren Schritte reduziert und die Hohlblöcke somit in mehreren Schritten gestreckt werden, kann der Umformgrad pro Schritt gering gehalten werden und damit eine Beschädigung des Werkstoffes verhindert werden. Die einzelnen Schritte werden vorzugsweise an nacheinander geschalteten Gerüsten durchgeführt.

Die Behandlung auf der Stoßbank, insbesondere die Verringerung der Wanddicke und Streckung der Hohlblöcke, kann beispielsweise durch Verwendung von Ziehringen mit entsprechendem Innendurchmesser erfolgen. Erfindungsgemäß erfolgt diese Behandlung aber durch Rollenkaliber, das heißt unter Verwendung von Rollenkalibern. Die Rollenkaliber können auch als Rollenkörbe bezeichnet werden. Vorzugsweise werden hierbei Rollenkaliber mit einem Dreiersatz an Rollen verwendet. Die Behandlung mittels Rollenkaliber weist den Vorteil auf, dass hierdurch die Reibungskräfte im Gegensatz zu der Verwendung von Ziehringen vermindert werden kann und dadurch die Streckung in den einzelnen Schritten, das heißt an den einzelnen Gerüsten erhöht werden kann. Die Rollen können auch durch Walzen ersetzt werden, die angetrieben sind.

Gemäß einer bevorzugten Ausführungsform werden zwei Blöcke verwendet, wobei die Werkstoffe der beiden Blöcke zueinander unterschiedlich sind. Bei dieser Ausführungsform der Verfahrens wird damit ein zweischichtiges Metallrohr hergestellt. Da vorzugsweise als Werkstoff für beide Schichten Metalle verwendet werden, wird das zweischichtige Metallrohr im Folgenden auch als Bimetallrohr oder bimetallisches Rohr bezeichnet. Der Vorteil der Verwendung von nur zwei Hohlblöcken besteht darin, dass bei der Behandlung auf der Stoßbank jeder der Hohlblöcke mit einem der Werkzeugkomponenten in Kontakt steht. Als Werkzeugkomponenten werden hierbei der Ziehring beziehungsweise die Rollen oder Walzen auf der einen Seite und der Dorn beziehungsweise die Stange auf der anderen Seite bezeichnet. Die Relativbewegung zwischen diesen beiden Hohlblöcken kann somit durch die Steuerung des Werkzeuges eingestellt werden.

Offenbart ist weiterhin ein mehrschichtiges Metallrohr das dadurch gekennzeichnet ist, dass dieses nach einem der erfindungsgemäßen Verfahren hergestellt ist. Die Vorteile eines solchen mehrschichtigen Metallrohres wurden bereits unter Bezugnahme auf die erfindungsgemäßen Verfahren beschrieben. Vorteile und Merkmale, die bezüglich der erfindungsgemäßen Verfahren beschrieben werden, gelten - soweit anwendbar - entsprechend für das mehrschichtige Metallrohr und umgekehrt.

Vorzugsweise liegen bei dem Metallrohr an den Grenzbereichen benachbarter Schichten des mehrschichtigen Metallrohres Diffusionsbereiche. Offenbart ist außerdem, dass zumindest zwei der Metallschichten des mehrschichtigen Metallrohres aus unterschiedlichen Werkstoffen bestehen.

Die Erfindung wird im Folgenden erneut unter Bezugnahme auf die beiliegenden Zeichnungen erläutert. Es zeigen:
Figuren 1a und 1b: schematische Darstellungen des Ineinandereinbringens der Blöcke;
Figuren 2a bis 2c: eine schematische Darstellung der Behandlung auf der Stoßbank; und
Figuren 3a und 3b: eine schematische Darstellung des Gefüges eines mehrschichtigen Metallrohres an dem Grenzbereich zweier Schichten.

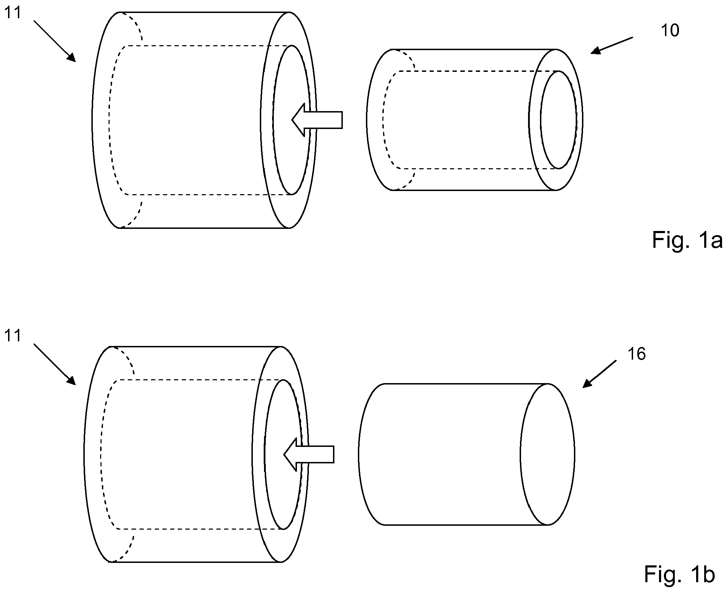

In Figur 1a sind als Innenblock 10 innerer Hohlblock 10 und ein äußerer Hohlblock 11 gezeigt. Wie durch den Pfeil angedeutet, werden die beiden Hohlblöcke ineinander eingebracht. Hierbei liegt nach dem Einbringen die Außenseite des inneren Hohlblocks 10 an der Innenseite des äußeren Hohlblocks 11 an. In der Figur 1a sind keine Böden an den Hohlblöcken 10, 11 gezeigt. Diese können aber an dem in Figur 1a linken Ende der Hohlblöcke 10, 11 vorgesehen werden oder gebildet sein.

In Figur 1b ist ein Innenblock in Form eines inneren Vollmaterialblocks 16 und ein Außenhohlblock 11, der in der dargestellten Ausführungsform den äußeren Hohlblock darstellt und im Folgenden auch als solcher bezeichnet wird, gezeigt. Wie durch den Pfeil angedeutet, wird auch der Vollmaterialblock 16 in den Außenhohlblock eingebracht. Hierbei liegt nach dem Einbringen die Außenseite des Vollmaterialblocks 16 an der Innenseite des äußeren Hohlblocks 11 an. In der Figur 1b ist kein Boden am Hohlblock 11 gezeigt. Dieser kann aber an dem in der Figur 1b linken Ende des Hohlblocks 11 vorgesehen oder gebildet sein. Bei der Kombination aus Hohlblock 11 und Vollmaterialblock 16 entsteht das Loch in dem Innenblock 16 durch einen Schrägwalzlochprozess, der dem Stoßbankprozess vorgeschaltet wird. Dafür wird der Hohlblock 11 mit eingeführtem Innenblock 16 auf die Umformtemperatur von 800°C bis 1500°C, vorzugsweise von 900°C bis 1400 °C, aufgewärmt. Nach dem Einbringen des Lochs oder der Lochung in dem Vollmaterialblock 16 stellt dieser einen Hohlblock dar und wird im Folgenden auch als solcher bezeichnet.

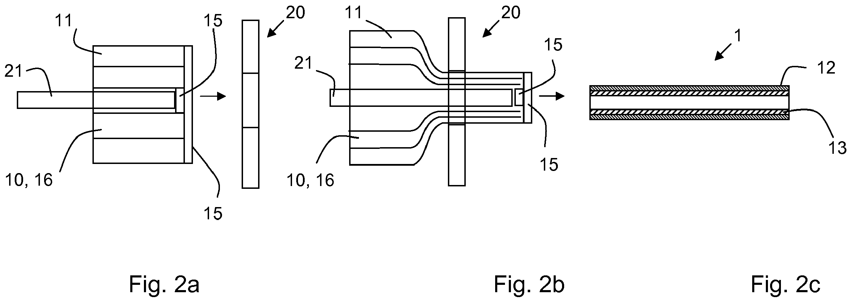

In Figur 2a ist gezeigt, dass die ineinander eingeführten Hohlblöcke 10, 16, 11 mit Böden 15 auf eine Stange 21, die auch als Dorn bezeichnet werden kann, aufgestülpt sind. In diesem Zustand werden die bereits zuvor erwärmten Hohlblöcke 10, 16, 11 in eine Stoßbank eingeführt. Hierzu wird, wie in Figur 2a gezeigt, durch Bewegung der Stange 21, die Stange 21 mit den Hohlblöcken 10, 16, 11 durch ein Rollenkaliber 20 eingeführt und durch dieses gedrückt. Die Rollen des Rollenkalibers 20 werden hierbei durch den Kontakt mit dem äußeren Hohlblock 11 angetrieben.

In Figur 2a ist ein Zwischenstadium gezeigt, in dem die Hohlblöcke 10, 16, 11, teilweise bereits in ihrer Wandstärke verringert und in der Länge gestreckt sind. Nachdem die Hohlblöcke 10, 16, 11 mehrere Rollenkaliber 20 (nicht gezeigt) passiert haben, liegt ein mehrschichtiges, in dem gezeigten Ausführungsbeispiel zweischichtiges Metallrohr 1 vor. Dieses bimetallische Rohr 1 ist in der Figur 2c schematisch gezeigt. Die äußere Schicht 12 ist hierbei durch den Werkstoff des äußeren Hohlblocks 11 und die innere Schicht 13 durch den Werkstoff des inneren Hohlblocks 10, 16 gebildet worden.

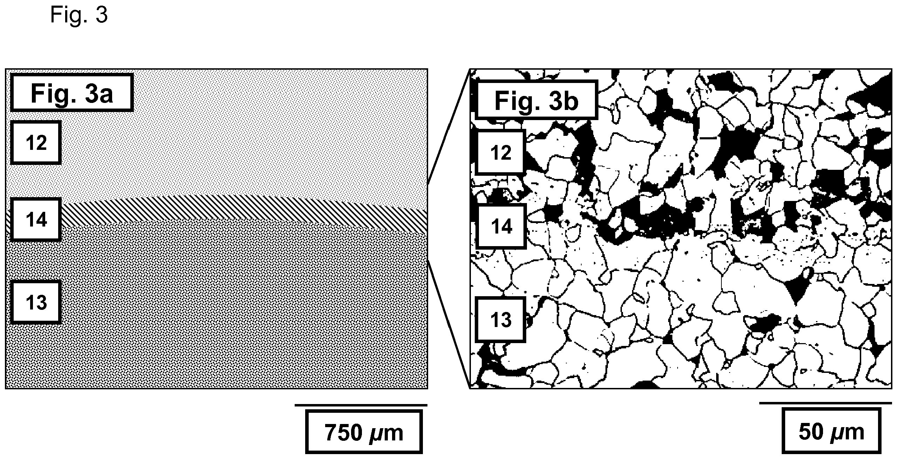

Figur 3a und b zeigen die Mikrostruktur der Fügestelle zwischen den Schichten 12, 14. Wie sich aus Figur 3 ergibt, ist zwischen dem Gefüge der äußeren Schicht 12 und der inneren Schicht 13 eine Diffusionsschicht 14 gebildet worden. Die Verbindung der zwei Schichten 12, 13 ist lückenlos. Bild 3b deutet auf eine durchgehende Diffusionsverbindung in Form einer Diffusionsschicht 14 der Schichten 12, 13 hin. Das bimetallische Rohr 1 kann daher ohne Anzeigen bei Längsfehler- oder Querfehlerprüfung mit Ultraschall überprüft werden.

Der Verlauf einer Ausführungsform der erfindungsgemäßen Verfahren wird nun erneut erläutert.

Es werden zwei Hohlblöcke unterschiedlicher Werkstoffe bei Raumtemperatur ineinander geführt. Der Innendurchmesser des Außenhohlblocks und der Außendurchmesser des Innenhohlblocks müssen aufeinander angepasst werden, so dass sich die Hohlblöcke, mit Rücksicht auf die Abmessungstoleranzen, in jedem Fall ineinander einführen lassen. Zwecks besserer Handhabung werden die Hohlblöcke gegeneinander fixiert. Hierzu können beispielsweise die Enden der beiden Hohlblöcke verschweißt werden.

Die ineinander eingeführten Hohlblöcke werden dann auf eine Temperatur von mehr als 1100°C erwärmt. Anschließend werden die so vorbereiteten und aufgewärmten Hohlblöcke in der Stoßbank auf die gewünschte Abmessung umgeformt. Während der Umformung werden die zwei Hohlblöcke durch die in der Stoßbank wirkenden Stauchkräfte zusammengefügt. Mit dem Verfahren können Hohlblöcke von einem Durchmesser bis zu 215mm und einer Wanddicke bis zu 40mm verarbeitet werden. So zusammengefügte Hohlblöcke können weiter mit Streckreduzierwalzwerk auf die gewünschte Abmessung verarbeitet werden.

Die mehrschichtigen Metallrohre und insbesondere ein bimetallisches Rohr kann für unterschiedliche Anwendungen verwendet werden.

Beispielsweise kann das Rohr als Rohr für Pumpen, insbesondere für Schlamm, Beton oder andere abrasive Medien verwendet werden. Hierbei wird für das Innenrohr beispielsweise ein Vergütungsstahl, beispielsweise C60, C100 und für das Außenrohr beispielsweise ein Baustahl oder Vergütungsstahl verwendet. Bei dieser Zusammensetzung des bimetallischen Rohres weist das Innenrohr eine hohe Verschleißbeständigkeit und das Außenrohr eine hohe Zähigkeit und eine gute Schweißbarkeit auf.

Weiterhin kann das erfindungsgemäß hergestellte Rohr als Rohr für Wärmetauscher verwendet werden. Hierbei wird für das Innenrohr beispielsweise T92 und für das Außenrohr beispielsweise ein X20CrMoV1, verwendet. Bei dieser Zusammensetzung des bimetallischen Rohres weist das Innenrohr eine hohe Zeitstandfestigkeit und das Außenrohr eine hohe Korrosionsbeständigkeit auf.

Weiterhin kann das erfindungsgemäß hergestellte Rohr als Benzinleitung für die Automobilindustrie verwendet werden. Hierbei wird für das Innenrohr beispielsweise eine Ni-basierte Legierung und für das Außenrohr beispielsweise ein hochfester Stahl, beispielsweise BAS100 oder BTR155 verwendet. Bei dieser Zusammensetzung des bimetallischen Rohres weist das Innenrohr eine hohe Korrosionsbeständigkeit auf und das Außenrohr ist preiswert.

Auch für Abgasleitungen für die Automobilindustrie kann das erfindungsgemäß hergestellte Rohr verwendet werden. Hierbei wird für das Innenrohr beispielsweise eine Fe-Al-Legierung und für das Außenrohr beispielsweise ein unlegierter Stahl verwendet. Bei dieser Zusammensetzung des bimetallischen Rohres weist das Innenrohr eine hohe Korrosionsbeständigkeit und das Außenrohr eine gute Zähigkeit auf.

Weitere Vorteile der erfindungsgemäßen Verfahrens sind beispielsweise, dass diese für die Verbindung sowohl von nahtlosen als auch von geschweißten Hohlkörpern und/oder einer Kombination dieser Hohlkörper unterschiedlicher Werkstoffe angewendet werden können. Zudem stellen die Verfahren eine Alternative zu einer Beschichtung des Rohres dar. Somit kann ein kostenintensives Plattinieren, das auch als Aufschweißen bezeichnet wird, entfallen. Daher tritt auch die bei diesem Aufschweißen durch die intensive Wärmeeinbringung erzeugte unhomogene Schweißstruktur nicht auf, die in der Regel eine Senkung der mechanisch-technologischen Eigenschaften mit sich bringt. Schließlich weist das erfindungsgemäß hergestellte Rohr eine gute Scherfestigkeit auf, ohne die Wärmeleitung zwischen den Rohren zu stören.

Zudem gewährleistet die erfindungsgemäß erzeugte Diffusionsverbindung eine gute Haftung zwischen dem Außenrohr und dem Innenrohr oder weiteren Rohren eines mehrschichtigen Metallrohres und gleichzeitig einen kontinuierlichen Übergang der physikalischen Eigenschaften, wie beispielsweise der Wärmeleitfähigkeit. Durch die Diffusionsverbindung ist die Grenzfläche zwischen den gefügten Rohren nahezu vollständig verschwunden. Solche bimetallischen Rohre sind auch ultraschallprüfungsfähig, ohne dass es zu einer Anzeige bei Längsfehler- und Querfehlerprüfung kommt.

### Bezugszeichenliste

- 1: Rohr
- 10: Innenblock
- 11: Außenhohlblock
- 12: äußere Schicht
- 13: innere Schicht
- 14: Diffusionsschicht
- 15: Boden
- 16: Vollmaterialblock

- 20: Rollenkaliber
- 21: Stange

## Patentansprüche

1. Verfahren zur Herstellung eines mehrschichtigen Metallrohres (1), **dadurch gekennzeichnet, dass** das Verfahren die folgenden Schritte umfasst:
- Ineinanderbringen von zumindest einem Innenblock (10, 16) und mindestens einem Außenhohlblock (11)
- Erwärmen der ineinander eingefügten Blöcke (10, 16, 11)
- Verringerung der Wanddicke der ineinander eingefügten Blöcke (10, 16, 11) durch Behandlung auf einer Stoßbank zur Bildung des mehrschichtigen Metallrohres (1), das das Endprodukt darstellt, wobei der Innenblock (10, 16) ein Hohlblock ist.

2. Verfahren zur Herstellung eines mehrschichtigen Metallrohres (1), **dadurch gekennzeichnet, dass** das Verfahren die folgenden Schritte umfasst:
- Ineinanderbringen von zumindest einem Innenblock (10, 16) und mindestens einem Außenhohlblock (11)
- Erwärmen der ineinander eingefügten Blöcke (10, 16, 11)
- Verringerung der Wanddicke der ineinander eingefügten Blöcke (10, 16, 11) durch Behandlung auf einer Stoßbank zur Bildung des mehrschichtigen Metallrohres (1), das das Endprodukt darstellt, wobei der Innenblock (10, 16) einen Vollmaterialblock (16) darstellt und vor der Behandlung der ineinander eingefügten Blöcke (10, 16, 11) auf der Stoßbank, die ineinander eingefügten Blöcke (10, 16, 11) einem Schrägwalzverfahren unterzogen werden.

3. Verfahren nach Anspruch 2, **dadurch gekennzeichnet, dass** die ineinander eingefügten Blöcke (10, 16, 11) vor dem Schrägwalzen auf eine Umformtemperatur, vorzugsweise auf eine Temperatur von 900°C bis 1400°C, erwärmt werden.

4. Verfahren nach einem der Ansprüche 1 bis 3, **dadurch gekennzeichnet, dass** der Werkstoff von zumindest zwei der ineinander eingebrachten Blöcke (10, 16, 11) unterschiedlich ist.

5. Verfahren nach einem der Ansprüche 1 bis 4, **dadurch gekennzeichnet, dass** der Werkstoff des Innenblocks (10, 16) von dem Werkstoff von zumindest einem der Außenhohlblöcke (11) unterschiedlich ist.

6. Verfahren nach einem der Ansprüche 1 bis 5, **dadurch gekennzeichnet, dass** die Blöcke (10, 16, 11) zumindest bei Beginn der Behandlung auf der Stoßbank eine Temperatur von 800°C bis 1300°C, vorzugsweise von 900° bis 1200°C, besitzen.

7. Verfahren nach einem der Ansprüche 1 bis 6, **dadurch gekennzeichnet, dass** bei der Behandlung auf der Stoßbank eine Reduktion der Wandstärke der ineinander eingefügten Blöcke (10, 16, 11) um 50% vorzugsweise um bis zu 75% erfolgt.

8. Verfahren nach einem der Ansprüche 1 bis 7, **dadurch gekennzeichnet, dass** die Behandlung auf der Stoßbank in mehreren Schritten, vorzugsweise in fünfzehn Schritten erfolgt.

9. Verfahren nach einem der Ansprüche 1 bis 8, **dadurch gekennzeichnet, dass** die Behandlung auf der Stoßbank durch Rollenkaliber erfolgt.

10. Verfahren nach einem der Ansprüche 1 bis 9, **dadurch gekennzeichnet, dass** zwei Blöcke (10, 16, 11) verwendet werden, wobei die Werkstoffe der beiden Blöcke (10, 16, 11) zueinander unterschiedlich sind.

## Claims

1. Method for producing a multi-layer metal tube (1), **characterized in that** the method comprises the following steps:
- inserting into each other at least an inner block (10, 16) and at least an outer block (11)
- heating the blocks (10, 16, 11) which are inserted into each other
- reducing the wall thickness of the blocks (10, 16, 11) which are inserted into each other by treatment on a push bench for forming the multi-layer metal tube (1), which is the final product, wherein the inner block (10, 16) is a hollow block.

2. Method for producing a multi-layer metal tube (1), **characterized in that** the method comprises the following steps:
- inserting into each other at least an inner block (10, 16) and at least an outer block (11)
- heating the blocks (10, 16, 11) which are inserted into each other
- reducing the wall thickness of the blocks (10, 16, 11) which are inserted into each other by treatment on a push bench for forming the multi-layer metal tube (1), which is the final product, wherein the inner block (10, 16) is a solid material block (16) and prior to the treatment of the blocks (10, 16, 11), which are inserted into each other, on a push bench the blocks (10, 16, 11), which are inserted into each other, are subjected to a cross rolling process.

3. Method according to claim 2, **characterized in that** the blocks (10, 16, 11) which are inserted into each other are heated to a forming temperature, preferably to a temperature of 900°C to 1,400°C, before cross rolling.

4. Method according to anyone of claims 1 to 3, **characterized in that** the material of at least two of the blocks (10, 16, 11) which are inserted into each other is different.

5. Method according to anyone of claims 1 to 4, **characterized in that** the material of the inner block (10, 16) is different to the material of at least one of the outer hollow blocks (11).

6. Method according to anyone of claims 1 to 5, **characterized in that** the blocks (10, 16, 11) at least at the beginning of the treatment on the push bench have a temperature of 800°C to 1,300°C, preferably of 900° zo 1,200°C.

7. Method according to anyone of claims 1 to 6, **characterized in that** during the treatment on the push bench a reduction of the wall thickness of the blocks (10, 16, 11) which are inserted into each other by 50%, preferably by up to 75%, is performed.

8. Method according to anyone of claims 1 to 7, **characterized in that** the treatment on the push bench is carried out in several steps, preferably in fifteen steps.

9. Method according to anyone of claims 1 to 8, **characterized in that** the treatment on the push bench is carried out by caliber rolls.

10. Method according to anyone of claims 1 to 9, **characterized in that** two blocks (10, 16, 11) are used, wherein the materials of the two blocks (10, 16, 11) are different from each other.

## Revendications

1. Procédé servant à fabriquer un tube métallique (1) multicouche, **caractérisé en ce que** le procédé comprend les étapes suivantes :
- l'imbrication d'au moins un bloc intérieur (10, 16) et d'au moins un bloc creux extérieur (11),
- le réchauffement des blocs (10, 16, 11) insérés l'un dans l'autre,
- la réduction de l'épaisseur de paroi des blocs (10, 16, 11) insérés les uns dans les autres par le traitement sur un banc pousseur afin de former le tube métallique (1) multicouche, qui constitue le produit final, dans lequel le bloc intérieur (10, 16) est un bloc creux.

2. Procédé servant à fabriquer un tube métallique (1) multicouche, **caractérisé en ce que** le procédé comprend les étapes suivantes :
- l'imbrication d'au moins un bloc intérieur (10, 16) et d'au moins un bloc creux extérieur (11),
- le réchauffement des blocs (10, 16, 11) insérés les uns dans les autres,
- la réduction de l'épaisseur de paroi des blocs (10, 16, 11) insérés les uns dans les autres par le traitement sur un banc pousseur afin de former le tube métallique (1) multicouche, qui constitue le produit final, dans lequel le bloc intérieur (10, 16) constitue un bloc de matériau massif (16) et les blocs (10, 16, 11) insérés les uns dans les autres sont soumis à un procédé de laminage oblique avant le traitement des blocs insérés (10, 16, 11) les uns dans les autres sur le banc pousseur.

3. Procédé selon la revendication 2, **caractérisé en ce que** les blocs (10, 16, 11) insérés les uns dans les autres sont réchauffés à une température de mise en forme, de préférence à une température allant de 900 °C à 1400 °C avant le laminage oblique.

4. Procédé selon l'une quelconque des revendications 1 à 3, **caractérisé en ce que** le matériau d'au moins deux blocs (10, 16, 11) introduits les uns dans les autres est différent.

5. Procédé selon l'une quelconque des revendications 1 à 4, **caractérisé en ce que** le matériau du bloc intérieur (10, 16) est différent du matériau d'au moins un des blocs creux extérieurs (11).

6. Procédé selon l'une quelconque des revendications 1 à 5, **caractérisé en ce que** les blocs (10, 16, 11) possèdent au moins au début du traitement sur le banc pousseur une température allant de 800 °C à 1300 °C, de préférence de 900 °C à 1200 °C.

7. Procédé selon l'une quelconque des revendications 1 à 6, **caractérisé en ce que** lors du traitement sur le banc pousseur, une réduction de l'épaisseur de paroi des blocs (10, 16, 11) insérés les uns dans les autres de 50 %, de préférence à hauteur de 75 %, est effectuée.

8. Procédé selon l'une quelconque des revendications 1 à 7, **caractérisé en ce que** le traitement sur le banc pousseur est effectué en plusieurs étapes, de préférence en quinze étapes.

9. Procédé selon l'une quelconque des revendications 1 à 8, **caractérisé en ce que** le traitement sur le banc pousseur est effectué par des calibres à rouleaux.

10. Procédé selon l'une quelconque des revendications 1 à 9, **caractérisé en ce que** deux blocs (10, 16, 11) sont utilisés, dans lequel les matériaux des deux blocs (10 16, 11) sont différents l'un par rapport à l'autre.
